# EUROPEAN PATENT APPLICATION

(11) **EP 1 116 546 A2**
(43) Date of publication of application: **18.07.2001**
(21) Application number: 00128639.2
(22) Date of filing: 28.12.2000
(51) Int. Cl.: B23K 33/00

(54) **Welding construction**

(30) Priority: 17.01.2000 JP 2000007366
(71) Applicant: Valeo Unisia Transmissions Kabushiki Kaisha, Atsugi-shi, Kanagawa 243-0213 (JP)
(72) Inventor: Sato, Masanori, Valeo Unisia Transmissions K.K., Atsugi-shi, Kanagawa 243-0213 (JP)
(74) Representative: Hager, Thomas J.

(57) **Abstract**

A weldment of a welding construction has a first member formed with a curved face, and a second member welded to the curved face of the first member. The second member has an inner conical face overlying the curved face of the first member and extending to a first end of the second member, and an oblique face extending toward the first end of the second member so that a distance between the oblique face and the inner conical face becomes smaller gradually toward the first end of the second member.

## Description

### BACKGROUND OF THE INVENTION

The present invention relates to a welding construction. More specifically, the present invention relates to the welding construction for welding an outer circumferential end portion of an annular body abutting on and along a spherical surface or a conical surface, in a circumferential direction relative to the spherical surface or the conical surface.

Japanese Patent Examined Publication No. 7(1995)-056328 which is an equivalent of Japanese Patent Unexamined Publication No. 4(1992)-165151 discloses a welding construction in which an annular body is welded to a spherical surface like the one mentioned above. In this related art, the annular body (annular base) of a driven plate (turbine claw) is welded to a spherical surface of a shell turbine of a torque converter.

### SUMMARY OF THE INVENTION

It is an object of the present invention to provide a welding construction for welding an outer circumferential end portion of an annular body abutting on and along a spherical surface or a conical surface, in a circumferential direction relative to the spherical surface or the conical surface.

It is another object of the present invention to provide the welding construction which is free from any welding failures even when a welding area is slightly shifted, relative to a welding torch, in an axial direction of a shell turbine.

There is provided a weldment of a welding construction, according to the present invention. This weldment comprises a first member comprising a curved face, and a second member welded to the curved face of the first member. The second member comprises an inner conical face overlying the curved face of the first member and extending to a first end of the second member, and an oblique face extending toward the first end of the second member so that a distance between the oblique face and the inner conical face becomes smaller gradually toward the first end of the second member.

The other objects and features of this invention will become understood from the following description with reference to the accompanying drawings.

### BRIEF DESCRIPTION OF THE DRAWINGS

Fig. 1 is a front view of a driven plate 5 for a torque converter, according to a first preferred embodiment of the present invention;
Figs. 2 is an enlarged cross section taken along lines II-II in Fig. 1;
Fig. 3 is a cross section of a welding construction for welding the driven plate 5 to a shell turbine 7 of the torque converter, according to the first preferred embodiment of the present invention;
Fig. 4 shows two types of enlarged cross sections each of which shows an essential part of the welding construction for welding the driven plate 5 to the shell turbine 7 of the torque converter, according to the first preferred embodiment of the present invention, in which
   Fig. 4A is a condition showing that a welding area 11 is properly positioned relative to a welding torch 8, and
   Fig. 4B is a condition showing that the welding area 11 is shifted from its proper position, rightward relative to the welding torch 8, in an axial direction of the shell turbine 7;
Fig. 5 is an enlarged cross section of an essential part of the driven plate 5 for the torque converter, according to a second preferred embodiment of the present invention;
Fig. 6 is an enlarged cross section of an essential part of the driven plate 5 for the torque converter, according to a third preferred embodiment of the present invention;
Fig. 7 is an enlarged cross section of an essential part of the driven plate 5 for the torque converter, according to a fourth preferred embodiment of the present invention;
Fig. 8 is an enlarged cross section of an essential part of the driven plate 5 for the torque converter, according to a related art; and
Fig. 9 shows two types of enlarged cross sections each of which shows an essential part of the welding construction for welding the driven plate 5 to the shell turbine 7 of the torque converter, according to the related art, in which
   Fig. 9A is a condition showing that the welding area 11 is properly positioned relative to the welding torch 8, and
   Fig. 9B is a condition showing that the welding area 11 is shifted from its proper position, rightward relative to the welding torch 8, in the axial direction of the shell turbine 7.

### DETAILED DESCRIPTION OF THE PREFERRED EMBODIMENT

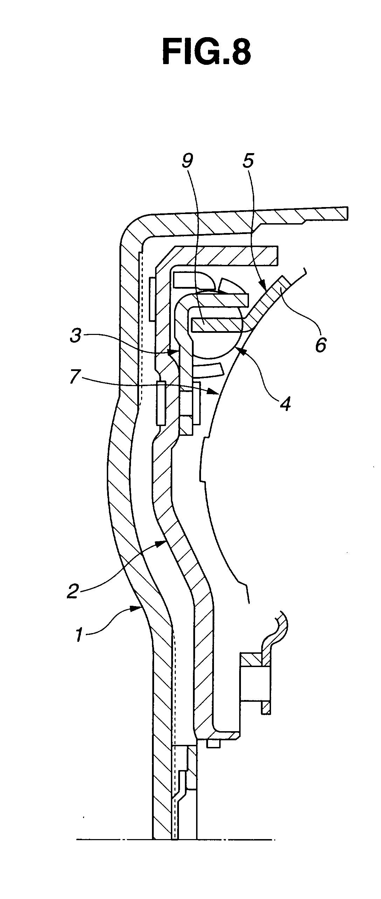

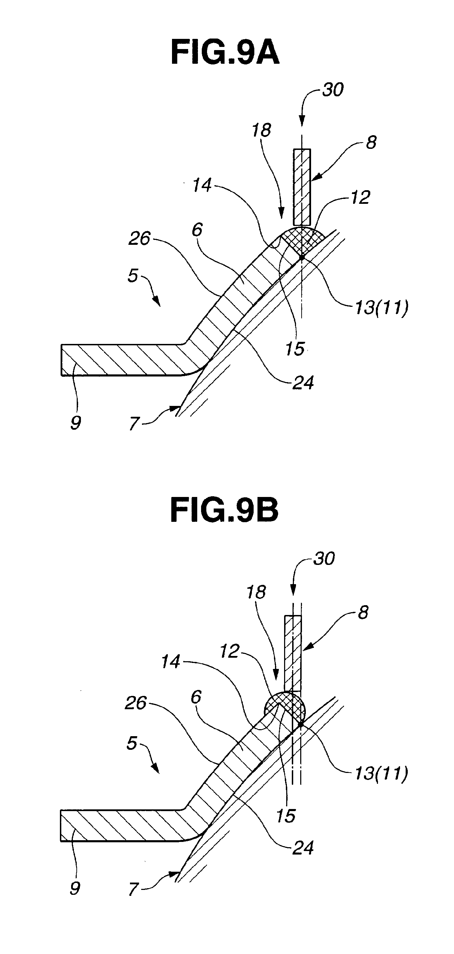

Fig. 8 shows an essential part of a cross section of a welding construction for welding an annular base 6 of a driven plate 5 to a spherical surface of a shell turbine 7 of a torque converter, according to a related art. There are shown in Fig. 8 a front cover 1, a lock up piston 2, a hold plate 3, a torsion spring 4, a driven plate 5 (or curved annular member 5), an annular base 6 (or annular body 6, conical annular plate 6), and a shell turbine 7 (or round surface 7). The annular base 6 is formed at the base of the driven plate 5, and is spherical in shape. The shell turbine 7 is also spherical in shape. Moreover, as is seen in Figs. 9A and 9B, the annular base 6 of the driven plate 5 has an external peripheral surface 15 (or oblique face 15, outer corner 15) that defines an inner edge 13. The spherical annular base 6 of the driven plate 5 abuts on and along a part of the spherical shell turbine 7. Furthermore, the annular base 6 of the driven plate 5 is securely fixed to the shell turbine 7 with the inner edge 13 welded to the spherical shell turbine 7. The external peripheral surface 15 defines a "substantially right angle" relative to an inside curved face 24 that is a part of the annular base 6 abutting on and along the shell turbine 7, and that is opposed to an outside curved surface 26.

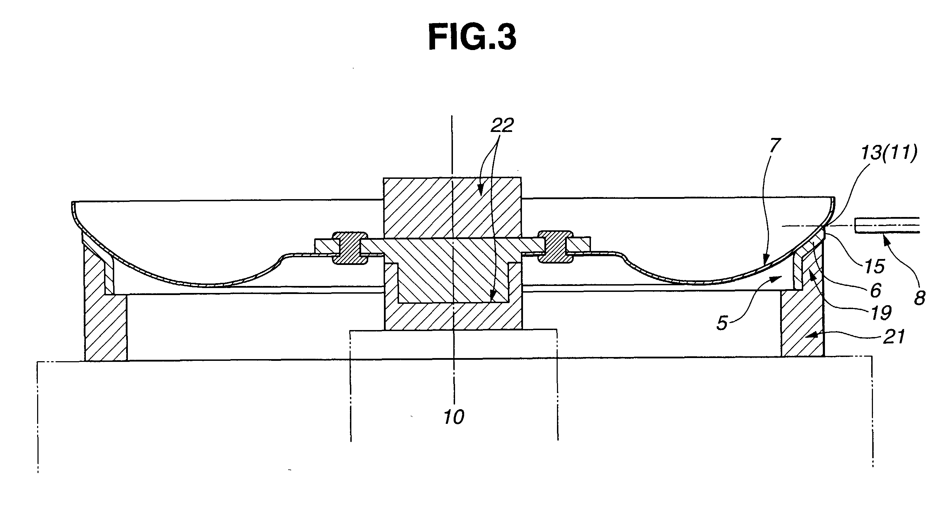

There is shown in Fig. 3 a condition that the driven plate 5 is welded to the shell turbine 7. An external circumferential portion 19 of the driven plate 5 is fixed to a first jig 21 in a first predetermined position, while an axial center portion 10 (or common axis 10) of the shell turbine 7 is fixed to a second jig 22 in a second predetermined position (although Fig. 3 is for a first preferred embodiment of the present invention). Under this condition, the driven plate 5 is rotated around the axial center portion 10 of the shell turbine 7. As is seen in Fig. 9A, a welding torch 8 is set (hereinafter referred to as "setting") in such a manner as to point at a welding area 11 which is a boundary (within which welding is required) between the inner edge 13 and a part of the spherical shell turbine 7. The welding torch 8 is used for applying arc to a weld metal 12 in a circumferential direction on the shell turbine 7, with the driven plate 5 thus rotated.

However, the above mentioned "substantially right angle" of the external peripheral surface 15 relative to the inside curved face 24 according to the related art causes the following problems in terms of welding of the driven plate 5 to the shell turbine 7: Each of the shell turbine 7 and the driven plate 5 has its product-to-product dimensional variations. Moreover, preparing the welding equipment causes other types of variations such as those attributable to workers' errors. These types of variations may make the "setting" less accurate and less precise as is seen in Fig. 9B, compared with Fig. 9A. More specifically, the welding area 11 in Fig. 9B is shifted axially (in an axial direction of the shell turbine 7, see Fig. 3) rightward relative to an imaginary reference line which extends from a center of an end of the welding torch 8 toward the shell turbine 7. This will cause the arc from the welding torch 8 to partly "jump" onto an outer corner 14 as is seen in Fig. 9B. As a result, the "jump" of the arc of the welding torch 8 prevents the weld metal 12 from properly mounting on the welding area 11, thus leading to a welding failure.

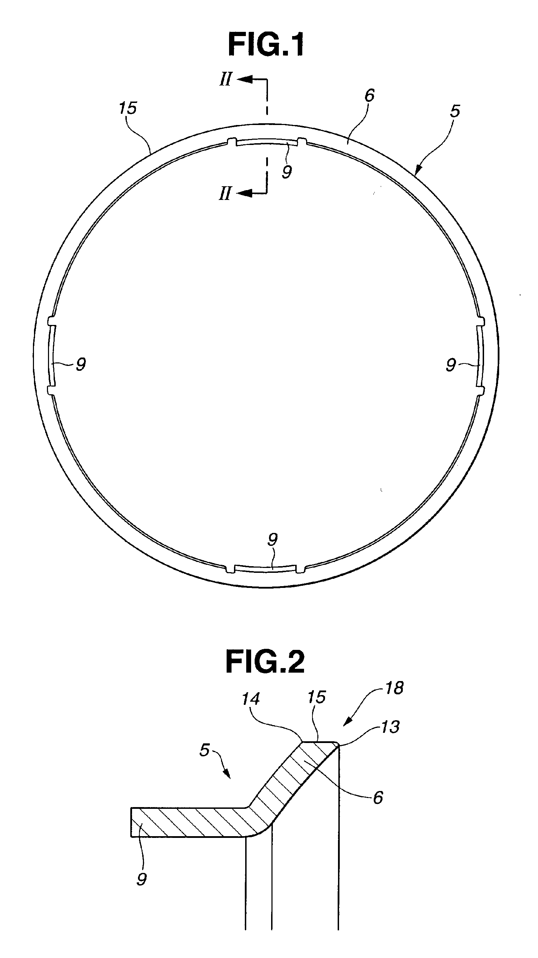

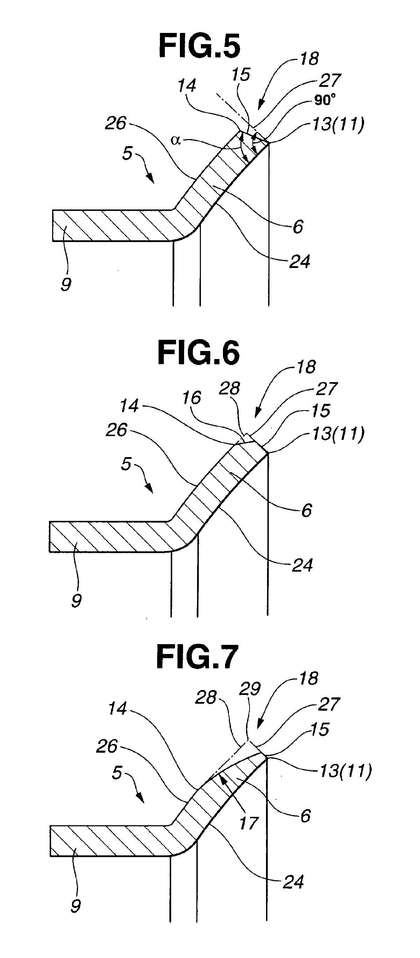

As is seen in Figs. 1 through 7, there are provided four types of welding constructions, according to first (Figs. 1 to 4B), second (Fig. 5), third (Fig. 6) and fourth (Fig. 7) preferred embodiments of the present invention. Each of those welding constructions is applicable to welding the driven plate 5 to the shell turbine 7 of the torque converter. Members corresponding to those of the related art disclosed above and seen in Figs. 8 to 9B have the same numerals. Repeated descriptions of the members according to the present invention are partly omitted from the following four preferred embodiments. Therefore, described in each of the following four preferred embodiments are only differences from those of the related art.

As is seen in Figs. 1 through 4B, there is provided a welding construction, according to the first preferred embodiment of the present invention. In the welding construction, an outer circumferential end portion 18 (or tapered end portion 18) of the annular base 6 (or annular body 6) of the driven plate 5 is welded, using the welding torch 8, to the spherical surface of the shell turbine 7 in the circumferential direction. The annular base 6 of the driven plate 5 abuts on and along the spherical surface of the shell turbine 7. In the first preferred embodiment, the external peripheral surface 15 of the annular base 6 is machined, leaving a small area for the inner edge 13 (or angled inner corner 13), so that the external peripheral surface 15 becomes substantially parallel relative to the common axis 10 (axial center portion 10). In other words, the entire external peripheral surface 15 around the shell turbine 7 is shaped into a substantially cylindrical surface. As is seen in Fig. 3, the common axis 10 is common to the driven plate 5 and the shell turbine 7. With the external peripheral surface 15 parallel to the common axis 10, the outer corner 14 on an opposite side to the inner edge 13 of the annular base 6 is, compared with that shown in each of Figs. 9A and 9B (related art), formed longitudinally low in a direction away from the welding torch 8, in other words, in an area defined away from the welding area 11. Under the present invention, the inner edge 13 coincides with the welding area 11.

In the first preferred embodiment, the outer corner 14 adjacent to the external peripheral surface 15 of the annular base 6 is formed through a coining press. Any external diameters enlarged through the coining press are correctly cut simultaneously during the coining press.

Moreover, as is seen in Fig. 1, there are formed four latching claws 9 projecting at regular angular intervals circumferentially on the driven plate 5.

With the welding construction disclosed above according to the first preferred embodiment of the present invention, the driven plate 5 is welded to the shell turbine 7. More specifically, as is seen in Fig. 3, the external circumferential portion 19 of the driven plate 5 is positioned at and secured to the first jig 21, while the axial center portion 10 of the shell turbine 7 is positioned at and secured to the second jig 22. Under this condition, the driven plate 5 and the shell turbine 7 are rotated around the axial center portion 10 of the shell turbine 7. The welding torch 8 is used for applying the arc to the weld metal 12 in the circumferential direction on the shell turbine 7.

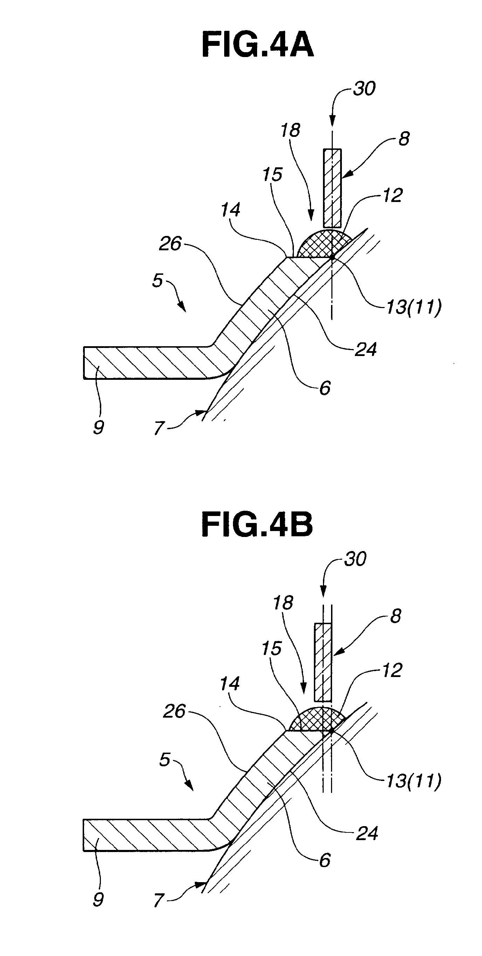

In Fig. 4A, the welding torch 8 is set at a welding torch position 30 in such a manner as to point at the welding area 11 (the boundary requiring welding, and disposed between the inner edge 13 and a part of the spherical surface of the shell turbine 7).

Contrary to this, in Fig. 4B the welding area 11 is slightly shifted rightward relative to the welding torch 8 in the axial direction of the shell turbine 7. Even under this condition of the welding area 11 being shifted, the weld metal 12, as a result, can be placed substantially snugly on the welding area 11 for the following features of the welding construction according to the first preferred embodiment: The external peripheral surface 15 of the annular base 6 is so machined as to become substantially parallel relative to the common axis 10 of both the driven plate 5 and the shell turbine 7. In other words, the entire external peripheral surface 15 around the shell turbine 7 is shaped into a substantially cylindrical surface. This can prevent the arc of the welding torch 8 from jumping in a direction of the outer corner 14 of the annular base 6 of the driven plate 5.

Each of the shell turbine 7 and the driven plate 5 may occasionally cause variations attributable to its own product-to-product dimensional variations, and variations attributable to workers' errors during preparation of the welding equipment. Such types of variations are responsible for the welding area 11 slightly shifted relative to the welding torch 8 at the proper welding torch position 30. However, the fact that the weld metal 12 can be placed substantially snugly on the welding area 11 even when the welding area 11 is slightly shifted is a proof that any welding failures are effectively prevented from occurring.

Furthermore, the coining press used for forming the outer corner 14 contributes to reduced machining cost, since the coining press is a method that is easier than a cutting work.

As is seen in Fig. 5, there is provided a welding construction, according to the second preferred embodiment of the present invention. The external peripheral surface 15 of the annular base 6 is so machined that the inner edge 13 forms an angle "a" which is smaller than ninety degrees. Therefore, the outer corner 14 of the annular base 6 is, compared with that shown in each of Figs. 9A and 9B (related art), formed longitudinally low in Fig. 5 in the direction away from the welding torch 8, in other words, in the area defined away from the welding area 11.

Therefore, the welding construction according to the second preferred embodiment works more effectively for preventing any welding failures from occurring than that according to the related art, although the welding construction according to first preferred embodiment works more effectively than that according to the second preferred embodiment.

As is seen in Fig. 6, there is provided a welding construction, according to the third preferred embodiment of the present invention. The external peripheral surface 15 of the annular base 6 is so machined as to leave the inner edge 13 intact while to have the outer corner 14 chamfered, to thereby define a chamfered area 16 (or oblique face 16, outer corner 16). About half of the external peripheral surface 15 is occupied by the chamfered area 16. Therefore, the outer corner 14 of the annular base 6 is, compared with that shown in each of Figs. 9A and 9B (related art), formed longitudinally low in Fig. 6 in the direction away from the welding torch 8, in other words, in the area defined away from the welding area 11.

Therefore, the welding construction according to the third preferred embodiment works more effectively for preventing any welding failures from occurring than that according to the related art, although the welding construction according to first preferred embodiment works more effectively than that according to the third preferred embodiment.

As is seen in Fig. 7, there is provided a welding construction, according to the fourth preferred embodiment of the present invention. The external peripheral surface 15 of the annular base 6 is so machined as to leave the inner edge 13 intact while to have the outer corner 14 neighbored by a round area 17 (or oblique face 17, outer corner 17), leaving a small area for the external peripheral surface 15. Therefore, the outer corner 14 of the annular base 6 is, compared with that shown in each of Figs. 9A and 9B (related art), formed longitudinally low in Fig. 7 in the direction away from the welding torch 8, in other words, in the area defined away from the welding area 11.

Therefore, the welding construction according to the fourth preferred embodiment further unlikely to causes the arc to jump toward the outer corner 14 since the outer corner 14 is not edged any more.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalence of such meets and bounds are therefore intended to be embraced by the claims.

For example, the present invention has disclosed the welding construction in which the driven plate 5 is welded to the shell turbine 7 of the torque converter. However, the present invention is widely applicable to all types of welding constructions in which an outer circumferential end portion of an annular body abutting on and along the spherical surface or the conical surface is welded in the circumferential direction relative to the spherical surface or the conical surface.

Moreover, in the above four preferred embodiments under the present invention, it is the coining press that is used for machining the outer corner 14 of the external peripheral surface 15 of the annular base 6 so that the outer corner 14 is, compared with that shown in the related art, formed longitudinally low in the direction away from the welding torch 8, in other words, in the area defined away from the welding area 11. However, the cutting work can replace the coining press.

The entire contents of basic Japanese Patent Application, application No. JP2000-007366, filed January 17, 2000, of which priority is claimed, is herein incorporated by reference.

## Claims

1. A weldment comprising:
a first member comprising a curved face; and
a second member welded to the curved face of the first member, the second member comprising an inner conical face overlying the curved face of the first member and extending to a first end of the second member, and an oblique face extending toward the first end of the second member so that a distance between the oblique face and the inner conical face becomes smaller gradually toward the first end of the second member.

2. The weldment as claimed in Claim 1, wherein the second member comprises a tapered end portion tapering toward the first end of the second member so that a thickness of the second member becomes smaller gradually to the first end of the second member.

3. The weldment as claimed in Claim 2, wherein the tapered end portion comprises an angled inner corner adjacent to the inner conical face, and an outer corner located away from the inner conical face, and beveled to form the oblique face.

4. The weldment as claimed in Claim 1, wherein the second member comprises a conical annular plate flaring out to the first end of the second member.

5. The weldment as claimed in Claim 1, wherein the inner conical face is in the form of one of a spherical surface and a curved surface of a right circular cone.

6. The weldment as claimed in Claim 3, wherein the outer corner of the tapered end portion is rounded so that the distance between the oblique face and the inner conical face becomes smaller gradually toward the first end of the second member.

7. The weldment as claimed in Claim 3, wherein the outer corner of the tapered end portion is formed through a coining press so that the distance between the oblique face and the inner conical face becomes smaller gradually toward the first end of the second member.

8. A welding construction comprising:
a curved annular member adapted to be welded to a mating curved face, the curved annular member extending curvedly to an outer circumferential end portion comprising:
an inner edge extending circumferentially so as to describe a circumferential line along which the curved annular member is to be welded; and
an outer corner which is beveled.

9. A welding construction comprising:
an annular base adapted to abut on a round surface, the annular base comprising an outer circumferential end portion to be welded to the round surface in a circumferential direction relative to the round surface, the outer circumferential end portion comprising:
an inner edge to be adjacent to the round surface and to form a junction between the annular base and the round surface; and
an outer corner positioned on an opposite side to the inner edge and so shaped as to lower a rise of the outer circumferential end portion from the round surface.

10. A welding construction as claimed in Claim 9, wherein the annular base further comprises an inside face abutting on the round surface and extending to the inner edge, and an outside surface opposed to the inside face and extending to the outer corner, and wherein the outer circumferential end portion further comprises an external peripheral surface extending from the inner edge.

11. The welding construction as claimed in Claim 10, wherein the round surface is one of a spherical surface and a conical surface.

12. The welding construction as claimed in Claim 11, wherein the round surface defines a welding area which is pointed at by a welding torch, the welding torch defining an imaginary reference line extending from a center of an end thereof toward the welding area, wherein the welding area substantially coincides with the inner edge of the outer circumferential end portion, and wherein the external peripheral surface extends from a first end portion at the inner edge to a second end portion.

13. The welding construction as claimed in Claim 12, wherein the outer corner and the second end portion of the external peripheral surface profile therebetween a substantially round area, such that the outer corner is so shaped as to lower the rise of the outer circumferential end portion from the round surface.

14. The welding construction as claimed in Claim 12, wherein the external peripheral surface of the annular base is so profiled as to allow the inner edge to form an angle smaller than ninety degrees, such that the outer corner is so shaped as to lower the rise of the outer circumferential end portion from the round surface.

15. The welding construction as claimed in Claim 12, wherein the second end portion of the external peripheral surface of the annular base is partly removed, such that the outer corner is so shaped as to lower the rise of the outer circumferential end portion from the round surface.

16. The welding construction as claimed in Claim 15, wherein the second end portion of the external peripheral surface is so removed as to form a chamfered area.

17. The welding construction as claimed in Claim 12, wherein the outer corner of the outer circumferential end portion of the annular base is formed through a coining press, such that the outer corner is so shaped as to lower the rise of the outer circumferential end portion from the round surface.

18. The welding construction as claimed in Claim 12, wherein the outer corner of the outer circumferential end portion of the annular base is formed through a cutting work, such that the outer corner is so shaped as to lower the rise of the outer circumferential end portion from the round surface.

19. The welding construction as claimed in Claim 12, wherein the annular base is a part of a driven plate comprising a plurality of latching claws which are disposed at regular angular intervals circumferentially on the driven plate.
